# EUROPEAN PATENT SPECIFICATION

(11) **EP 2 824 786 B1**
(45) Date of publication and mention of the grant of the patent: **20.04.2016**
(21) Application number: 13720979.7
(22) Date of filing: 13.02.2013
(51) Int. Cl.: H02G 7/14

(54) **VIBRATION DAMPER FOR AN AERIAL CABLE OR CONDUCTOR**
SCHWINGUNGSDÄMPFER FÜR EINE FREILEITUNG ODER -KABEL
AMORTISSEUR DE VIBRATIONS POUR UN CÂBLE OU UN CONDUCTEUR AÉRIEN

(30) Priority: 09.03.2012 ES 201230264
(43) Date of publication of application: 14.01.2015
(73) Proprietor: SBI Connectors España, S.A., 08635 Sant Esteve Sesrovires (ES)
(72) Inventor: VISSER, Ton, NL-2641 EL Ter Aar (NL); SANLLEHI MUÑOZ, Josep, E-08635 Sant Esteve Sesrovires - Barcelona (ES); RODRIGUEZ LOPEZ, Albert, E-08635 Sant Esteve Sesrovires - Barcelona (ES)
(74) Representative: Sugrañes Patentes y Marcas
(86) International application number: PCT/ES2013/070087
(87) International publication number: WO 2013/132122

(56) References cited:
- EP-A1- 0 345 567
- WO-A1-01/22549
- WO-A1-2011/022009
- DE-U1- 7 910 461

## Description

### Technical Field of the Invention

The invention relates to a vibration damper for an aerial cable or conductor, particularly applicable to the piping of power distribution substations. The damper is of the type comprising a resilient suspension cable with counterweights fixed at its respective ends.

### Background of the Invention

Different variants of damper devices for aerial cables or conductors comprising a pair of counterweights associated with the ends of a resilient cable and a jaw holding said resilient cable on a suspended cable or conductor subject to vibrations caused by wind are known in the art.

The use of counterweights with different masses or arranged such that the resilient cable as a whole has different moments of inertia is also known in the art.

The jaw incorporated in these devices compresses a central section of the resilient cable by stamping, by melting or by other means. The jaw is generally shaped like a hook in the part for attachment to the suspended cable and is provided with a short arm which can be adjusted by means of a threaded fixing bolt which cooperates with the hook for fixing the damper device to the suspended cable. Alternatively, the jaw can be shaped like a retention ring to clamp the suspended cable formed by at least two ring segments which can be coupled to one another. In any case, the attachment of the resilient cable to the jaw or to a component of the jaw is a secure, non-detachable attachment.

It so happens that said resilient cable and the counterweights apply a moment on the device which tends to rotate around the cable due to gravity when the device is designed to be placed on the suspended cable such that the resilient cable and the counterweights are arranged above the cable and not below it, when said resilient cable has different moments of inertia. This effect undesirably complicates the task of installing the damper device because the damper device is unstable and tends to turn over as long as it is not securely held on the aerial cable. This involves a risk for the operator who must be on standby to manually hold the clamp of the damper device while performing the operations necessary for firmly securing it to the suspended cable. Considering that the cables or conductors on which the damper device must be installed may be suspended at great heights, it is necessary to eliminate this risk.

Therefore, an objective of the present invention is to disclose a damper device which can be more easily installed on the suspended aerial cable or conductor, eliminating this drawback.

### Disclosure of the Invention

The vibration damper for an aerial cable or conductor presented is of the type comprising a resilient suspension cable with counterweights fixed at its respective ends.

The damper is essentially characterized in that it comprises a clamp formed by a first arched segment intended to be placed on the upper face of the aerial cable; and at least a second arched segment complementary and securely coupleable to the first segment below the aerial cable for forming, together with the first segment, a ring which tightly clamps the mentioned aerial conductor, a seat for the cable being formed in the apex of the outer face of the first segment, with a notch oriented such that when placed therein, the cable is arranged in an inclined vertical plane with respect to the vertical plane passing through the axis of the clamp, the damper including a cap closing the top portion of the notch and pressing on the cable to immobilize it, said cable being provided with a sleeve between its two counterweights for supporting the cable in the seat of the first segment of the clamp, the sleeve being arranged in a position such that the cable has a mass or different moments of inertia at both sides of the sleeve.

Unlike the prior art, the damper is envisaged so that the resilient cable can be fixed on the clamp once the clamp has been secured on the aerial cable or conductor. In anticipation that this arrangement would cause the operator to not place the resilient cable in its correct position, the clamp incorporates means guiding the position of the cable, i.e., its exact inclination, and the cable also incorporates means for showing the exact point for fixing on the clamp, formed by the sleeve.

This solution is compatible in dampers in which the moment of inertia of the assembly formed by the resilient cable and the counterweights is different at both sides of the sleeve because the masses of the counterweights are different, or because, with the mass of the counterweights being the same, the axial length of the cable measured from the sleeve to each of the counterweights is different, this being a preferred variant of the invention.

According to another aspect of the invention, the clamp comprises two second arched segments which, coupled to the first segment and juxtaposed side by side, complete the ring clamping the aerial conductor. The arrangement of two second segments allows better securing the clamp to the aerial cable or conductor, and they especially assure to a larger extent that the mechanical stresses of the damper due to wind do not cause the loosening of the clamp.

In a variant of the invention, the inclined vertical plane forms an angle B comprised between 10 and 45º with respect to the vertical plane passing through the axis of the clamp. It is noted herein that this angle ß is formed by the inclined plane in which the resilient cable is arranged with respect to the vertical plane passing through the axis of the clamp in the slope of the resilient cable with lower moment of inertia.

The angle ß is preferably 20º.

According to another aspect of the invention, the first segment and the second segment or segments forming the clamp are provided at the ends thereof with flange-like shoulders oriented outwards, provided with through holes for attachment by means of screws and corresponding anti-vibration washers.

### Brief Description of the Drawings

Figure 1 is an exploded, perspective view of a damper according to the invention;
Figure 2 is a top view of an aerial cable or conductor with the damper of Figure 1 correctly installed; and
Figure 3 is a front view of the installation of Figure 2.

### Detailed Description of the Invention

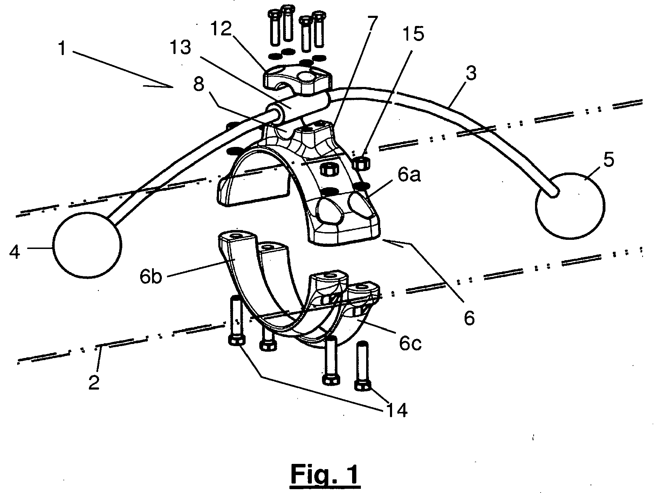

Figure 1 shows a vibration damper 1 for an aerial cable or conductor 2 depicted by dotted lines in Figures 1 to 3 in perspective view and with its components in a correlative fitting position. The recommended way of installing of this damper 1 is explained below making reference to its components.

First, the clamp 6 must be secured on the cable or conductor 2. To that end, the ring formed by the first segment 6a and the second segments 6b and 6c of the clamp 6 is closed around the mentioned cable 2, tightening it.

The clamp 6 is placed such that the first segment 6a is arranged on the upper face of the aerial cable or conductor 2.

To tighten the ring around the mentioned aerial cable 2, the two second segments 6b and 6c are placed juxtaposed side by side and are coupled at their ends to the ends of the first segment 6a by means of screws 14 and corresponding anti-vibration washers 15 and nuts, as illustrated in Figure 1. For that purpose, the first segment 6a and the second segments 6b and 6c forming the clamp 6 are provided at the ends thereof with flange-like shoulders oriented outwards, said shoulders being provided with corresponding through holes which are axially aligned to be traversed by the screws during the operation of assembling the clamp 6 on the aerial cable 2.

Next, the resilient cable 3 with its counterweights 4 and 5 is placed on the first segment 6a of the clamp 6. To assure the correct placement of the assembly formed by the cable 3 and the counterweights, it is seen in Figure 1 that a seat 7 for the cable 3 is formed in the apex of the outer face of the mentioned first segment 6a, with a notch 8 oriented such that the cable 3 only fits into a predetermined position, which is dictated by the direction of said notch 8, the section of which in the example is a concave curved contour.

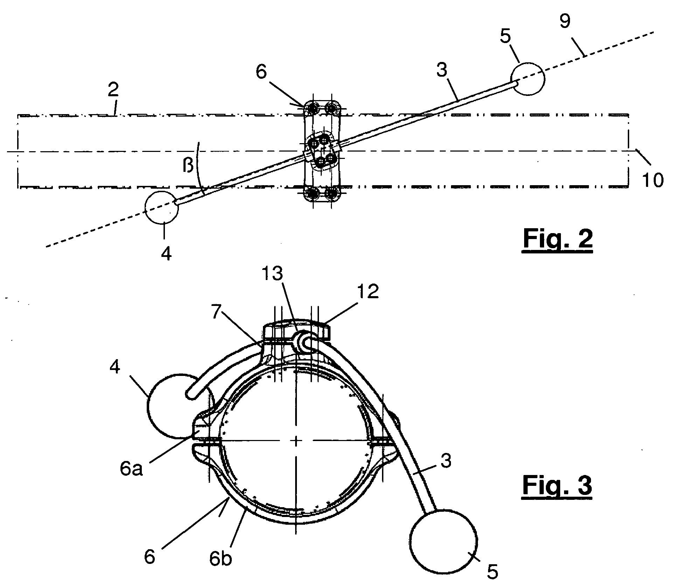

When the cable 3 is placed in said notch 8, it is arranged in an inclined vertical plane 9 with respect to the vertical plane 10 passing through the axis of the clamp 6, as indicated in Figure 2. Specifically, the inclined vertical plane 9 forms an angle ß of 20º with respect to the vertical plane 10 passing through the axis of the clamp 6.

In order for the counterweights 4 and 5 to be at the previously calculated optimal distance from the clamp 6 so that the damper 1 is suitable for damping the first two vibration modes of the aerial cable 2, a sleeve 13 or similar element indicating the position for fixing the cable on the clamp 6 while at the same time favoring its subsequent tight fixing is provided between the two counterweights 4 and 5 the resilient cable 3, as will be explained below.

In the example, the counterweights 4 and 5 have the same mass but the sleeve 13 is placed in a position such that the axial length of the cable 3 measured from the sleeve 13 to each of the counterweights 4, 5 is different. This feature can be seen in Figures 2 and 3, and the counterweight 5 is specifically placed at a greater distance with respect to the clamp 6.

For fixing the cable 3 to the clamp, the damper includes a cap 12 closing the top portion of the notch 8 of the seat 7 formed in the first segment 6a of the clamp, which can be screwed on the mentioned seat pressing on the sleeve 13 of the cable 3, which slightly deforms under pressure, being adapted to the space formed between the cap 12 and the notch 8 for favor a perfect, allowance-free fit.

## Claims

1. A vibration damper (1) for an aerial cable or conductor (2), comprising a resilient suspension cable (3) with counterweights (4, 5) fixed at its respective ends, the damper being **characterized in that** it comprises a clamp (6) formed by
- a first arched segment (6a), intended to be placed on the upper face of the aerial conductor; and
- at least a second arched segment (6b, 6c), complementary and securely coupleable to the first segment below the aerial cable for forming, together with the first segment, a ring which tightly clamps the mentioned aerial conductor,
a seat (7) for the cable (3) being formed in the apex of the outer face of the first segment (6a), with a notch (8) oriented such that when placed therein, the cable is arranged in an inclined vertical plane (9) with respect to the vertical plane (10) passing through the axis of the clamp, the damper including a cap (12) closing the top portion of the notch (8) and pressing on the cable to immobilize it, said cable being provided with a sleeve (13) between its two counterweights for supporting the cable in the seat of the first segment of the clamp, the sleeve (13) being arranged in a position such that the cable has a mass or different moments of inertia at both sides of the sleeve.

2. The damper (1) according to claim 1, **characterized in that** the axial length of the cable (3) measured from the sleeve (13) to each of the counterweights (4, 5) is different.

3. The damper (1) according to claim 1 or 2, **characterized in that** the clamp (6) comprises two second arched segments (6b and 6c) which, coupled to the first segment (6a) and juxtaposed side by side, complete the ring clamping the aerial conductor.

4. The damper (1) according to any one of the preceding claims, **characterized in that** the inclined vertical plane (9) forms an angle ß comprised between 10 and 45º with respect to the vertical plane (10) passing through the axis of the clamp.

5. The damper (1) according to the preceding claim, **characterized in that** the angle ß is 20º.

6. The damper (1) according to any one of the preceding claims, **characterized in that** the first segment (6a) and the second segment or segments (6b and/or 6c) forming the clamp (6) are provided at the ends thereof with flange-like shoulders oriented outwards, provided with through holes for attachment by means of screws (14) and corresponding anti-vibration washers (15).

## Patentansprüche

1. Schwingungsdämpfer (1) für eine Freileitung oder -kabel (2), umfassend ein elastisches Tragkabel (3) mit Gegengewichten (4, 5), die an ihren jeweiligen Enden befestigt sind, wobei der Dämpfer **dadurch gekennzeichnet ist, dass** er eine Klemme (6) umfasst, welche durch
- einen ersten bogenförmigen Abschnitt (6a), welcher dazu vorgesehen ist, auf die obere Seite der Freileitung angebracht zu werden; und
- zumindest einen zweiten bogenförmigen Abschnitt (6b, 6c), welcher zu dem ersten Abschnitt komplementär und mit diesem unter dem Freikabel sicher koppelbar ist, um, zusammen mit dem ersten Abschnitt, einen Ring zu bilden, welcher die genannte Freileitung dicht klemmt,
gebildet ist,
wobei eine Aufnahme (7) für das Kabel (3) am Scheitel der äußeren Seite des ersten Abschnitts (6a) gebildet ist, aufweisend eine Aussparung (8), welche so ausgerichtet ist, dass wenn es darin angebracht ist, das Kabel in einer geneigten vertikalen Ebene (9) in Bezug auf die vertikale Ebene (10), welche durch die Achse der Klemme geht, angeordnet ist, wobei der Dämpfer einen Deckel (12) aufweist, welcher den oberen Teil der Aussparung (8) schließt und auf das Kabel für seine Fixierung drückt, wobei das genannte Kabel mit einer Hülse (13) zwischen seinen beiden Gegengewichten versehen ist, um das Kabel in der Aufnahme des ersten Abschnitts der Klemme zu tragen, wobei die Hülse (13) derart in einer Stellung angeordnet ist, dass das Kabel eine Masse oder verschiedene Trägheitsmomente auf beiden Seiten der Hülse aufweist.

2. Dämpfer (1) nach Anspruch 1, **dadurch gekennzeichnet, dass** die axiale Länge des Kabels (3), gemessen von der Hülse (13) bis zu jedem der Gegengewichte (4, 5), verschieden ist.

3. Dämpfer (1) nach Anspruch 1 oder 2, **dadurch gekennzeichnet, dass** die Klemme (6) zwei zweite bogenförmige Abschnitte (6b und 6c) umfasst, welche, mit dem ersten Abschnitt (6a) gekoppelt und nebeneinandergestellt, den die Freileitung klemmenden Ring vervollständigen.

4. Dämpfer (1) nach einem der vorhergehenden Ansprüche, **dadurch gekennzeichnet, dass** die geneigte vertikale Ebene (9) einen Winkel β bildet, welcher zwischen 10 und 45° in Bezug auf die vertikale Ebene (10), welche durch die Achse der Klemme geht, beträgt.

5. Dämpfer (1) nach dem vorhergehenden Anspruch, **dadurch gekennzeichnet, dass** der Winkel β 20° beträgt.

6. Dämpfer (1) nach einem der vorhergehenden Ansprüche, **dadurch gekennzeichnet, dass** der erste Abschnitt (6a) und der zweite Abschnitt oder Abschnitte (6b und/oder 6c), welche die Klemme (6) bilden, an ihren Enden mit nach außen ausgerichteten flanschartigen Schultern versehen sind, welche mit Durchgangslöchern für die Verbindung durch Schrauben (14) und entsprechenden schwingungsdämpfenden Unterlegscheiben (15) versehen sind.

## Revendications

1. Amortisseur de vibrations (1) pour un câble ou un conducteur aérien (2), comprenant un câble élastique de suspension (3) avec des contrepoids (4, 5) fixés à ses extrémités respectives, l'amortisseur étant **caractérisé en ce qu'**il comprend une pince (6) formée par :
- un premier segment arqué (6a), destiné à être mis en place sur la face supérieure du conducteur aérien ; et
- au moins un deuxième segment arqué (6b, 6c), qui peut être accouplé de manière complémentaire et sûre au premier segment sous le câble aérien pour former, conjointement avec le premier segment, un anneau qui pince étroitement ledit conducteur aérien,
un siège (7) pour le câble (3) étant formé au sommet de la face extérieure du premier segment (6a), avec une entaille (8) orientée de telle manière que lorsqu'il est mis en place en son sein, le câble est aménagé sur un plan vertical incliné (9) par rapport au plan vertical (10) passant à travers l'axe de la pince, l'amortisseur comportant une calotte (12) fermant la portion supérieure de l'entaille (8) et pressant le câble pour l'immobiliser, ledit câble étant pourvu d'un manchon (13) entre ses deux contrepoids pour supporter le câble sur le siège du premier segment de la pince, le manchon (13) étant aménagé dans une position telle que le câble a une masse ou des moments d'inertie différents des deux côtés du manchon.

2. Amortisseur (1) selon la revendication 1, **caractérisé en ce que** la longueur axiale du câble (3) mesurée du manchon (13) à chacun des contrepoids (4, 5) est différente.

3. Amortisseur (1) selon la revendication 1 ou 2, **caractérisé en ce que** la pince (6) comprend deux deuxièmes segments arqués (6b et 6c) qui, accouplés au premier segment (6a) et juxtaposés l'un à côté de l'autre, complètent l'anneau qui pince le conducteur aérien.

4. Amortisseur (1) selon l'une quelconque des revendications précédentes, **caractérisé en ce que** le plan vertical incliné (9) forme un angle □ compris entre 10 et 45° par rapport au plan vertical (10) passant à travers l'axe de la pince.

5. Amortisseur (1) selon la revendication précédente, **caractérisé en ce que** l'angle □ es de 20°.

6. Amortisseur (1) selon l'une quelconque des revendications précédentes, **caractérisé en ce que** le premier segment (6a) et le deuxième segment ou segments (6b et/ou 6c) formant la pince (6) sont pourvus à leurs extrémités d'épaulements sous forme de bride orientés vers l'extérieur, pourvus de trous traversants pour fixation par le biais de vis (14) et de rondelles anti-vibrations correspondantes (15).
